# EUROPEAN PATENT SPECIFICATION

(11) **EP 3 184 586 B1**
(45) Date of publication and mention of the grant of the patent: **10.04.2019**
(21) Application number: 15202256.2
(22) Date of filing: 23.12.2015
(51) Int. Cl.: C08L 23/12, C08L 23/14, C08K 7/14, C08K 7/28, C08L 23/16, C08L 51/06

(54) **LIGHT WEIGHT FIBER REINFORCED POLYPROPYLENE COMPOSITION**
MIT LEICHTGEWICHTIGER FASER VERSTÄRKTE POLYPROPYLENZUSAMMENSETZUNG
COMPOSITION DE POLYPROPYLÈNE RENFORCÉE PAR DES FIBRES LÉGÈRES

(43) Date of publication of application: 28.06.2017
(73) Proprietor: Borealis AG, 1220 Vienna (AT)
(72) Inventor: Dix, Albrecht, 3676 Notodden (NO); Hartl, Anna, 4040 Linz (AT); Mitter, Franz, 4064 Oftering (AT)
(74) Representative: Zumstein, Angela

(56) References cited:
- EP-A1- 2 803 693
- WO-A1-2014/008123
- WO-A1-2015/103099
- US-A1- 2007 191 530

## Description

The present invention relates to a new fiber reinforced polypropylene composition with reduced weight and maintained mechanical properties, as well as articles formed therefrom. The invention further relates to foamed article formed from the said fiber reinforced polypropylene composition.

Polypropylene is a material used in a wide variety of technical fields and reinforced polypropylenes have in particular gained relevance in fields previously exclusively relying on non-polymeric materials, in particular metals. One particular example of reinforced polypropylenes are glass fiber reinforced polypropylenes. Such materials enable a tailoring of the properties of the composition by selecting the type of polypropylene, the amount of glass fiber and sometimes by selecting the type of coupling agent used. Accordingly, nowadays the glass-fiber reinforced polypropylene is a well-established material for applications requiring high stiffness, heat deflection resistance and resistance to both impact and dynamic fracture loading (examples include automotive components with a load-bearing function in the engine compartment, support parts for polymer body panels, washing machine and dishwasher components). EP 2 803 693 A1 discloses a carbon fiber-reinforced polypropylene sheet and a molded article thereof.

However, there is still a need in the art for weight and complexity reduction. Due to legislation requirements in carbon emission reduction and the need for economical engines it is a special interest in automotive industry to validate all kinds of lightweight potential. Potential fields of interest include slimming down the relevant part weight, via eg. using either chemical or physical foaming. On the other hand, substitution of "high-density materials" by replacing with lighter sources is also of high interest in the field.

"Glass bubbles", also commonly known as "hollow glass microspheres", "glass microbubbles", "hollow glass beads" are widely used in industry as additives to polymeric compositions. In many industries, glass bubbles are useful for lowering weight and improving processing and flow properties of a polymeric composition.

For example, US 7365144 B2 discloses a polypropylene composition comprising 50 to 80 wt% of polypropylene, 6 to 30 wt% of talc, 10 to 30 wt% of a rubber, 3 to 15 wt% of glass bubbles and 0.5 to 7wt% of maleic anhydride polypropylene.

WO 2006/055612 A1 describes a polymer composition containing a polymeric matrix, a block copolymer and microspheres which have a silane-based surface treatment.

WO 2015/103099 A1 discloses a composition consisting of a polyolefin, hollow glass microspheres, a polyolefin impact modifier that is chemically non-crosslinked and free of polar functional groups, and a compatiblizer.

The drawback of using glass bubbles as filler to polypropylene is that it will cause a loss in mechanical properties especially for impact related properties in the compact injection moulded parts which are of high importance in the automotive industry due to crash test requirement.

Therefore, the objective of the present invention is to develop a composition with remarkably reduced weight as well as maintained mechanical properties, specifically maintained resistant to fast impact.

The finding of the present invention is this objective can be achieved by the embedment of glass bubbles in combination with fibers and a polar modified polypropylene in a polypropylene matrix.

Accordingly the present invention is directed to a fiber reinforced polymer composition comprising
(a) from 10 to 85 wt%, based on the total weight of the fiber reinforced polymer composition, of a polypropylene (PP),
(b) from 12.5 to 53 wt%, based on the total weight of the fiber reinforced polymer composition, of fibers (F),
(c) from 2 to 12 wt%, based on the total weight of the fiber reinforced polymer composition, of glass bubbles (GB), and
(d) from 0.5 to 5 wt.-%, based on the total weight of the fiber reinforced polymer composition, of a polar modified polypropylene (PMP) as coupling agent,
wherein the polypropylene (PP) comprises a heterophasic propylene copolymer (HECO) comprising
(e) a polypropylene matrix (M) being a propylene homopolymer or a propylene copolymer, and
(f) an elastomeric propylene copolymer (E) comprising units derived from propylene and ethylene and/or C4 to C20 α-olefin.

Another aspect of the present invention is directed to an article comprising the fiber reinforced polymer composition as defined herein. Preferably, the article is a molded article, more preferably an injection molded article or a foamed article.

It is surprisingly found that through the inclusion of glass bubbles in the fiber reinforced polymer composition, a remarkable weight reduction of the material is achieved at a maintained level of puncture impact performance. Furthermore, the foamed article comprising the fiber reinforced polymer composition as defined herein shows a surprisingly improved mechanical performance, in comparison to foamed article without glass bubbles.

In the following the invention is defined in more detail.

### The fiber reinforced polymer composition

It is essential that the fiber reinforced polymer composition according to this invention comprises a polypropylene (PP), fibers (F), glass bubbles (GB) and a polar modified polypropylene (PMP) as coupling agent.

Accordingly, the fiber reinforced polymer composition comprising
(a) from 10 to 85 wt%, preferably from 30 to 85 wt%, more preferably 40 to 75 wt%, most preferably from 45 to 70 wt%, based on the total weight of the fiber reinforced polymer composition, of a polypropylene (PP),
(b) from 12.5 to 53 wt%, preferably from 15 to 50 wt%, more preferably from 20 to 50 wt%, most preferably from 25 to 40 wt%, based on the total weight of the fiber reinforced polymer composition, of fibers (F),
(c) from 2 to 12 wt%, preferably from 2 to 10 wt%, more preferably from 3 to 10 wt% based on the total weight of the fiber reinforced polymer composition, of glass bubbles (GB), and
(d) from 0.5 to 5.0 wt.-%, preferably from 0.5 to 4.0 wt%, more preferably from 0.8 to 3.5 wt%, most preferably from 1.0 to 3.0 wt%, based on the total weight of the fiber reinforced polymer composition, of a polar modified polypropylene (PMP) as coupling agent.

Additionally, the fiber reinforced polymer composition may further comprise up to 20 wt%, based on the total weight of the fiber reinforced polymer composition, of an elastomeric polymer impact modifier (IM). Preferably the elastomeric polymer impact modifier (IM) can be selected from the group of C2C3, C2C4, C2C8 impact modifier. Most preferably the impact modifiers (H) are selected from the group of C2C8 impact modifiers.

Examples of commercially available elastomeric polymer impact modifier (IM) are marketed under the trademarks Engage®, Queo®, Exact®, Tafmer® and the like.

Therefore, according to one embodiment of the present invention the fiber reinforced polymer composition comprising
(a) from 30 to 85 wt%, more preferably 40 to 75 wt%, most preferably from 45 to 70 wt%, based on the total weight of the fiber reinforced polymer composition, of a polypropylene (PP),
(b) from 12.5 to 53 wt%, preferably from 15 to 50 wt%, more preferably from 20 to 50 wt%, most preferably from 25 to 40 wt%, based on the total weight of the fiber reinforced polymer composition, of fibers (F),
(c) from 2 to 12 wt%, preferably from 2 to 10 wt%, more preferably from 3 to 10 wt% based on the total weight of the fiber reinforced polymer composition, of glass bubbles (GB), and
(d) from 0.5 to 5.0 wt%, preferably from 0.5 to 4.0 wt%, more preferably from 0.8 to 3.5 wt%, most preferably from 1.0 to 3.0 wt%, based on the total weight of the fiber reinforced polymer composition, of a polar modified polypropylene (PMP) as coupling agent.
(e) up to 20 wt%, preferably up to 18 wt%, more preferably up to 15 wt%, based on the total weight of the fiber reinforced polymer composition, of an elastomeric polymer impact modifier (IM).

Additionally, the fiber reinforced polymer composition may comprise at least one additive. The term "additive" covers also additives which are provided as a masterbatch containing the polymeric carrier material. Typical additives are acid scavengers, antioxidants such as phenolic antioxidant (AO) and the hindered amine light stabilizer (HALS), colorants, pigments such as carbon black or TiO2, anti-scratch agents, dispersing agents and carriers.

The term "at least one" additive in the meaning of the present invention means that the additive comprises, preferably consists of, one or more additive(s).

In one embodiment of the present invention, the at least one additive comprises, preferably consists of, one additive. Alternatively, the at least one additive comprises, preferably consists of, a mixture of two or more additives. For example, the at least one antioxidant comprises, preferably consists of, of a mixture of two or three antioxidants.

Preferably, the at least one additive comprises, more preferably consists of, a mixture of two or more additives.

In a preferred embodiment the fiber reinforced polymer composition contains a α-nucleating agent in addition. Accordingly, the nucleating agent is preferably selected from the group consisting of
(i) salts of monocarboxylic acids and polycarboxylic acids, e.g. sodium benzoate or aluminum tert-butylbenzoate, and
(ii) dibenzylidenesorbitol (e.g. 1,3 : 2,4 dibenzylidenesorbitol) and C1-C8-alkylsubstituted dibenzylidenesorbitol derivatives, such as methyldibenzylidenesorbitol, ethyldibenzylidenesorbitol or dimethyldibenzylidenesorbitol (e.g. 1,3 : 2,4 di(methylbenzylidene) sorbitol), or substituted nonitol-derivatives, such as 1,2,3,-trideoxy-4,6:5,7-bis-O-[(4-propylphenyl)methylene]-nonitol, and
(iii) salts of diesters of phosphoric acid, e.g. sodium 2,2'-methylenebis (4, 6,-di-tert-butylphenyl) phosphate or aluminium-hydroxy-bis[2,2'-methylene-bis(4,6-di-t-butylphenyl)phosphate], and
(iv) vinylcycloalkane polymer and vinylalkane polymer, and
(v) mixtures thereof.

Such additives are generally described, for example, in "Plastic Additives Handbook", 5th edition, 2001 of Hans Zweifel.

Preferably the fiber reinforced polymer composition contains up to 2.0 wt.-% of the α-nucleating agent. In a preferred embodiment the fiber reinforced polymer composition contains not more than 3000 ppm, more preferably of 1 to 3000 ppm, more preferably of 5 to 2000 ppm of an α-nucleating agent, in particular selected from the group consisting of dibenzylidenesorbitol (e.g. 1,3 : 2,4 dibenzylidene sorbitol), dibenzylidenesorbitol derivative, preferably dimethyldibenzylidenesorbitol (e.g. 1,3 : 2,4 di(methylbenzylidene) sorbitol), or substituted nonitol-derivatives, such as 1,2,3,-trideoxy-4,6:5,7-bis-O-[(4-propylphenyl)methylene]-nonitol, vinylcycloalkane polymer, vinylalkane polymer, and mixtures thereof.

In the following the individual components of the fiber reinforced polymer composition are described in more detail.

### The polypropylene (PP)

The fiber reinforced polymer composition must comprise a polymer component. To achieve the well-balanced mechanical properties such as high stiffness and impact at light weight, the polymer composition must contain a specific polypropylene.

The term "polypropylene (PP)" encompasses propylene homopolymer, propylene random copolymers, heterophasic polymers and mixtures thereof.

Moreover, the term "propylene copolymer" encompasses propylene random copolymers, heterophasic polymers and mixtures thereof.

As known for the skilled person, random propylene copolymer is different from heterophasic polypropylene which is a propylene copolymer comprising a propylene homo or random copolymer matrix component (1) and an elastomeric copolymer component (2) of propylene with one or more of ethylene and C4-C8 alpha-olefin copolymers, wherein the elastomeric (amorphous) copolymer component (2) is dispersed in said propylene homo or random copolymer matrix polymer (1).

In one embodiment, the polypropylene (PP) being present in the fiber reinforced polymer composition comprises a propylene homopolymer (H-PP) and/or a propylene copolymer (C-PP). For example, the fiber reinforced polymer composition comprises a propylene homopolymer (H-PP) and a propylene copolymer (C-PP). Alternatively, the fiber reinforced polymer composition comprises a propylene homopolymer (H-PP) or a propylene copolymer (C-PP).

In one specific embodiment of the present invention the polypropylene (PP) comprises a heterophasic propylene copolymer (HECO) comprising
(a) a polypropylene matrix (M) being a propylene homopolymer or a propylene copolymer, and
(b) an elastomeric propylene copolymer (E) comprising units derived from propylene and
   ethylene and /or C4 to C20 α-olefin.

Such heterophasic propylene copolymer (HECO) is well known in the art and commercially available. This applies especially for the heterophasic propylene copolymer (HECO) as defined in details below.

The polypropylene matrix (M) of the heterophasic propylene copolymer (HECO) can be a propylene homopolymer or a propylene copolymer with comonomers selected from ethylene and/or C4 to C12 α-olefins. Preferably, the polypropylene matrix (M) of the heterophasic propylene copolymer (HECO) is a propylene homopolymer.

The xylene cold insoluble (XCI) fraction of the heterophasic propylene copolymer (HECO) is dominated by the polypropylene matrix (M), whereas the main component of the xylene cold soluble fraction is the elastomeric propylene copolymer (E). Accordingly on the one hand the properties of the xylene cold insoluble (XCI) fraction and the polypropylene matrix (M) are essentially the same, and on the other hand the properties of the xylene cold soluble (XCS) fraction and the elastomeric propylene copolymer (E) are essentially the same.

The expression propylene homopolymer used in the instant invention relates to a polypropylene that consists substantially, i.e. of more than 99.7 wt%, still more preferably of at least 99.8 wt%, of propylene units. In a preferred embodiment only propylene units in the propylene homopolymer are detectable.

Accordingly the comonomer content of the polypropylene matrix (M) and/or of the xylene cold insoluble (XCI) fraction is preferably equal or below 1.0 wt%, more preferably not more than 0.8 wt.-%, still more preferably not more than 0.5 wt%, like not more than 0.2 wt%, e.g. not detectable.

Preferably the polypropylene matrix (M) and/or the xylene cold insoluble (XCI) fraction of the heterophasic propylene copolymer (HECO) has a melt flow rate MFR2 (230 °C), measured according to ISO1133, in the range of 30 to 90 g/10 min, more preferably in the range of 40 to 70 g/10 min, still more preferably in the range of 45 to 60 g/10 min.

As mentioned above, in addition to the polypropylene matrix (M), the heterophasic propylene copolymer (HECO) comprises an elastomeric propylene copolymer (E) which is dispersed within said polypropylene matrix (M).

According to one embodiment, the elastomeric propylene copolymer (E) comprises monomers copolymerizable with propylene, for example, comonomers such as ethylene and/or C4 to C12 α-olefins, e.g. 1-butene and/or 1-hexene. Preferably the elastomeric propylene copolymer (E) comprises, especially consists of, monomers copolymerizable with propylene selected from the group consisting of ethylene, 1-butene and 1-hexene. More specifically the elastomeric propylene copolymer (E) comprises - apart from propylene - units derivable from ethylene and/or 1-butene. Thus in an especially preferred embodiment the elastomeric propylene copolymer (E) phase comprises units derivable from ethylene and propylene only.

In case the polypropylene matrix (M) of the heterophasic propylene copolymer (HECO) is a propylene copolymer, it is preferred that the comonomer(s) of the propylene copolymer and the elastomeric propylene copolymer (E) are the same.

In a preferred embodiment, the elastomeric propylene copolymer (E) and/or the xylene cold soluble (XCS) fraction of the heterophasic propylene copolymer (HECO) has a comonomer content in the range of 10 to 50 wt.-%, more preferably 20 to 45 wt.-%, still more preferably 30 to 42 wt.-%.

Additionally or alternatively to the comonomer content it is preferred that the elastomeric propylene copolymer (E) and/or the xylene cold soluble (XCS) fraction of the heterophasic propylene copolymer (HECO) has an intrinsic viscosity (IV) in the range of 1.0 to 8.0 dl/g, more preferably in the range of 1.5 to 6.0 dl/g, still more preferably in the range of 2.0 to 3.5 dl/g.

According to one embodiment of the present invention, the amount of the elastomeric propylene copolymer (E) and/or of the xylene cold soluble (XCS) fraction of the heterophasic propylene copolymer (HECO) is in the range of 10 to 50 wt.-%, more preferably 15 to 40 wt.-%, still more preferably 20 to 35 wt.-%, based on the total amount of the heterophasic propylene copolymer (HECO).

The comonomer content of the heterophasic propylene copolymer (HECO) is preferably in the range of 3.0 to 25 wt.-%, more preferably in the range of 5.0 to 20 wt.-%, still more preferably in the range of 10 to 18 wt.-%, based on the total amount of the heterophasic propylene copolymer (HECO).

Preferably the heterophasic propylene copolymer (HECO) has a melt flow rate MFR2 (230 °C) in the range of 1.0 to 50 g/10 min, more preferably 2.0 to 30 g/10 min, still more preferably 5.0 to 20 g/10 min.

### Fibers (F)

The second essential component of the present fiber reinforced polymer composition is the fibers (F). Preferably the fibers (F) are selected from the group consisting of glass fibers, metal fibers, mineral fibers, ceramic fibers and the mixtures thereof. Glass fibers are especially preferred. More preferably the glass fibers are cut glass fibers, also known as short fibers or chopped strands.

The cut or short glass fibers used for the fiber reinforced polymer composition, i.e. before compounding, preferably have an average length of from 1 to 10 mm, more preferably from 1 to 7 mm, for example 3 to 5 mm, or 4 mm. The cut or short glass fibers used in the fiber reinforced polymer composition preferably have an average diameter of from 8 to 20 µm, more preferably from 9 to 16 µm, for example 10 to 15 µm.

Preferably, before compounding, the fibers (GF) have an aspect ratio of 125 to 650, preferably of 150 to 450, more preferably 200 to 400, still more preferably 250 to 350. The aspect ratio is the relation between average length and average diameter of the fibers.

### Glass Bubbles (GB)

The glass bubbles (GB) used in the fiber reinforce polymer composition and articles according to the present invention can be made by techniques known in the art (see, e.g., US 2,978,340 (Veatch et al.); US 3,030,215 (Veatch et at.); US 3,129,086 (Veatch et a!.); and US 3,230,064 (Veatch et al); US 3,365,315 (Beck et ah); US 4,391 ,646 (Howeil); and US 4,767,726 (Marshall)). Techniques for preparing glass bubbles (GB) typically include heating milled frit, commonly referred to as "feed", which contains a blowing agent (e.g. sulfur or a compound of oxygen and sulfur). Frit can be made by heating mineral components of glass at high temperatures until molten glass is formed.

A variety of sizes of glass bubbles (GB) may be used. As used herein, the term size is considered to be equivalent with the diameter and height of the glass bubbles (GB). In a preferred embodiment in the present invention, the glass bubbles (GB) have an average diameter of 10-50 µm, preferably 15-45 µm, more preferably 15 to 40 µm. The size distribution of the glass bubbles (GB) used in the present invention may be Gaussian, normal, or non-normal. Non-normal distributions may be unimodal or multimodal (e. g. bimodal).

Glass bubbles (GB) used in the present invention can be obtained commercially and include those marketed by 3M Company, St. Paul, MN, under the trade designation "3M GLASS BUBBLES" (e.g., grades S60, S60HS, 1M30K, 1M16K, S38HS, S38XHS, 42HS, 46, and HSQ 10000). Other suitable glass bubbles (GB) can be obtained, for example, from Potters Industries, Valley Forge, PA, (an affiliate of PQ Corporation) under the trade designations "SPHERICEL HOLLOW GLASS SPHERES" (e.g., grades 110P8 and 60P18) and "Q-CEL HOLLOW SPHERES" (e.g., grades 30, 6014, 6019, 6028, 6036, 6042, 6048, 5019, 5023, and 5028), from Silbrico Corp., Hodgkins, IL under the trade designation "SIL- CELL" (e.g., grades SIL 35/34, SIL-32, SIL-42, and SIL-43), and from Sinosteel Maanshan Inst, of Mining Research Co., Maanshan, China, under the trade designation "Y8000".

The Glass bubbles (GB) used in the composition described in the present invention typically need to be strong enough to survive the injection molding process. Therefore, it is preferred that the Glass bubbles (GB) may be selected to have crush strength of at least 80 MPa, preferably at least 90 MPa, such as at least 100 MPa.

### Polar modified polypropylene (PMP)

In order to achieve an easier and more uniform dispersion of Glass bubbles (GB) and Fibers (F) in the polymer components which act in the fiber reinforced polymer composition as a matrix, the fiber reinforced polymer composition comprises a specific coupling agent.

The coupling agent according to this invention is a polar modified polypropylene (PMP).

The polar modified polypropylene (PMP) preferably comprises a modified (functionalized) polymer and optionally a low molecular weight compound having reactive polar groups. Modified α-olefin polymers, in particular propylene homopolymers and copolymers, like copolymers of ethylene and propylene with each other or with other α-olefins, are most preferred, as they are highly compatible with the polymers of the fiber reinforced composition. Modified polyethylene can be used as well.

In terms of structure, the modified polymers are preferably selected from graft or block copolymers.

In this context, preference is given to modified polymers containing groups deriving from polar compounds, in particular selected from the group consisting of acid anhydrides, carboxylic acids, carboxylic acid derivatives, primary and secondary amines, hydroxyl compounds, oxazoline and epoxides, and also ionic compounds.

Specific examples of the said polar compounds are unsaturated cyclic anhydrides and their aliphatic diesters, and the diacid derivatives. In particular, one can use maleic anhydride and compounds selected from C₁ to C₁₀ linear and branched dialkyl maleates, C₁ to C₁₀ linear and branched dialkyl fumarates, itaconic anhydride, C₁ to C₁₀ linear and branched itaconic acid dialkyl esters, maleic acid, fumaric acid, itaconic acid and mixtures thereof.

In a particular preferred embodiment of the present invention, the fiber reinforced polymer composition comprises a polar modified polypropylene (PMP), being a propylene copolymer grafted with maleic anhydride, preferably the propylene copolymer grafted with maleic anhydride comprises ethylene as comonomer units.

The polar modified polypropylene (PMP), can be produced in a simple manner by reactive extrusion of the polymer, for example with maleic anhydride in the presence of free radical generators (like organic peroxides), as disclosed for instance in EP 0 572 028.

The amounts of groups deriving from polar compounds in the polar modified polypropylene (PMP), are from 0.5 to 5.0 wt.%, preferably from 0.5 to 4.0 wt.%, and more preferably from 0.5 to 3.0 wt.%.

Preferred values of the melt flow rate MFR₂ (230 °C) for the modified polymer, i.e. for the adhesion promoter (AP), are from 1.0 to 500 g/10 min.

For mixing the individual components of the instant fiber reinforced composition, a conventional compounding or blending apparatus, e.g. a twin screw extruder may be used. Preferably, mixing is accomplished in a co-rotating twin screw extruder. The polymer materials recovered from the extruder are usually in the form of pellets. These pellets are then preferably further processed, e.g. by injection molding to generate articles and products of the inventive fiber reinforced composition.

The present invention also relates to articles, preferably automotive articles comprising the fiber reinforced composition as defined above. Automotive articles, especially of car interiors and exteriors, like instrumental carriers, shrouds, structural carriers, bumpers, side trims, step assists, body panels, spoilers, dashboards, interior trims and the like, may be produced comprising the fiber reinforced composition as defined in the present invention.

Furthermore, the present invention also relates to foamed article comprising the fiber reinforced composition described above.

Examples of such foamed articles for automotive applications are instrumental carriers, shrouds, or structural carriers.

Appropriate preparation methods of foamed articles, either by chemical or physical foaming, are commonly known to the skilled person. For example, the MuCell® microcellular foam injection molding process developed by Trexel Inc. may be used for producing the foamed articles comprising the fiber reinforced composition described in the present invention.

In the following the present invention is further illustrated by means of examples.

### EXAMPLES

The following definitions of terms and determination methods apply for the above general description of the invention as well as to the below examples unless otherwise defined.

### 1. Measuring methods

**The total filler content** is measured and calculated by incineration of the samples according to ISO 3451-1:2008 with the deviation from the norm of 550C in a microwave oven.

**Density** was measured on injection moulded specimen by pycnometer method according to ISO 1183-1:2004.

**MFR2 (230°C)** is measured according to ISO 1133 (230°C, 2.16 kg)

**Xylene cold soluble (XCS):** Content of xylene cold soluble (XCS) is determined at 25°C according to ISO 16152, first edition; 2005-07-01. The part which remains insoluble is the xylene cold insoluble (XCI) fraction.

**Intrinsic viscosity** is measured according to DIN ISO 1628/1, October 1999 (in Decalin at 135 °C).

**The maximum force (Fₘₐₓ) and energy to 8 mm deflection** were determined in puncture impact testing at a testing speed of 4.4 m/s and room temperature (23°C / 50% RH) . In order to assess real part and injection molding conditions as well as typical impact conditions, a finished part (bracket/console) was used for testing. The part was positioned on two line supports (span length of 35.5 cm) and impacted in the center with an impactor with a hemispherical head with 20 mm diameter. Besides of support and specimen type, testing followed ISO 6603-2. The force-deflection curve was recorded and two parameters were used to compare different material compositions which are:
- maximum force (Fₘₐₓ) in N
- as no fracture or puncture of the parts occurred, the energy to 8 mm deflection in "J" was calculated

### 2. Examples

The following inventive example IE1 and IE2 and comparative example CE1 were prepared by compounding on a 27mm co-rotating twin-screw extruder. The following process parameters were used:
- throughput of 10-20 kg/h
- barrel temperatures of 200 °C

Injection moulded compact parts (bracket/console) are prepared for the mechanical test. Also, foamed parts with the same setting and dimensions were produced by the Mucell® process on a KM650-4300GX injection moulding machine with the following key process parameters:
Barrel temperatures of 240 °C
SCF (Super Critical Fluid) Content: 0.25 to 0.32%

Table 1 summarizes the composition of the inventive and comparative examples and their properties

**Table 1: Overview of composition and mechanics for inventive and comparative examples**

| | | **IE 1** | **IE2** | **CE 1** |
|---|---|---|---|---|
| PP1 | [wt.-%] | 58.5 | 66.5 | 66.5 |
| GF | [wt.-%] | 32 | 28 | 32 |
| GB | [wt.-%] | 8 | 4 | 0 |
| PMP | [wt.-%] | 1.5 | 1.5 | 1.5 |
| Density | [g/cm³] | 1.06 | 1.07 | 1.14 |
| Total Filler Content | [wt.-%] | 39.5 | 31.9 | 31.7 |
| Average weight of compact part | g/ single part | 851 | 839 | 892 |
| Average weight of 5% foamed part | g/ single part | 808 | 792 | 850 |
| Fₘₐₓ of compact part | [N] | 557 | 525 | 570 |
| Fₘₐₓ of 5% foamed part | [N] | 539 | 481 | 449 |
| Energy to 8mm deflection (compact part) | [J] | 3.28 | 3.08 | 3.41 |
| Energy to 8mm deflection (5% foamed part) | [J] | 3.24 | 2.89 | 2.66 |

**"PP1"** in both inventive examples and comparative examples is a commercial product EE013AE of Borealis AG, which is a heterophasic propylene copolymer. The basic properties of **PP1** is showed in Table 2.

**"GF"** is the commercial product Johns Manville ThermoFlow CS EC 13 636 4mm. Having a filament diameter of 13µm and a strand length of 4mm

**"GB"** is the commercial product 3M™ IM16K Hi-Strength Glass Bubbles with crush strength of 110 MPa, diameter 20µm, available from 3M company (USA).

**"PMP"** is the commercial product Exxelor™ PO1020 which is a maleic anhydride (MAH) functionalized polypropylene commercially available from ExxonMobil (USA) having a density of 0.9 g/cm3, an MFR2 (230°C/2.16kg) of 430 g/10min and a MAH content of 1.0 mol%.

**Table 2: Properties of PP1**

| | | |
|---|---|---|
| MFR | [g/10min] | 10.5 |
| MFR of XCI | [g/10min] | 50 |
| XCS | [wt%] | 29.0 |
| C2 total | [wt%] | 15.5 |
| C2 in XCS | [wt%] | 39.0 |
| IV of XCS | [dl/g] | 3.0 |
| Flexural Modulus | [MPa] | 770 |

It can be gathered from Table 1 that the inventive examples IE1and IE2 comprising glass bubbles in combination with glass fibers in a polypropylene matrix has well-improved mechanical properties for foamed articles, at reduced density and thus at lighter weight.

## Claims

1. A fiber reinforced polymer composition comprising
(a) from 10 to 85 wt%, based on the total weight of the fiber reinforced polymer composition, of a polypropylene (PP),
(b) from 12.5 to 53 wt%, based on the total weight of the fiber reinforced polymer composition, of fibers (F),
(c) from 2 to 12 wt%, based on the total weight of the fiber reinforced polymer composition, of glass bubbles (GB), and
(d) from 0.5 to 5 wt.-%, based on the total weight of the fiber reinforced polymer composition, of a polar modified polypropylene (PMP) as coupling agent,
wherein the polypropylene (PP) comprises a heterophasic propylene copolymer (HECO) comprising
(e) a polypropylene matrix (M) being a propylene homopolymer or a propylene copolymer, and
(f) an elastomeric propylene copolymer (E) comprising units derived from propylene and ethylene and /or C4 to C20 α-olefin.

2. A fiber reinforced polymer composition according to claim 1, wherein the heterophasic propylene copolymer (HECO) has
(a) a melt flow rate MFR2(230°C), measured according to ISO1133, in the range of 1.0 to 50 g/10min,
(b) a comonomer content in the range of 3.0 to 25 wt%, based on the total heterophasic propylene copolymer (HECO), and
(c) a xylene soluble content (XCS) in the range of 10 to 50 wt%, based on the total heterophasic propylene copolymer (HECO).

3. A fiber reinforced polymer composition according to any one of the preceding claims, wherein the fiber reinforced polymer composition further comprises up to 20 wt%, based on the total weight of the fiber reinforced polymer composition, of an elastomeric polymer impact modifier (IM).

4. A fiber reinforced polymer composition according to any one of the preceding claims, wherein the fibers (F) have an average diameter of from 8 to 20 µm and an aspect ratio of 125 to 650.

5. A fiber reinforced polymer composition according to any one of the preceding claims, wherein the fibers (F) are selected from the group consisting of glass fibers, metal fibers, mineral fibers, ceramic fibers and mixtures thereof.

6. A fiber reinforced polymer composition according to any one of the preceding claims, wherein the glass bubbles (GB) have an average diameter of 10-50 µm.

7. A fiber reinforced polymer composition according to any one of the preceding claims, wherein the polar modified polypropylene (PMP) is a propylene copolymer grafted with maleic anhydride, preferably the propylene copolymer grafted with maleic anhydride comprises ethylene as comonomer units.

8. An automotive article comprising the fiber reinforced polymer composition according to any one of the preceding claims.

9. A foamed article comprising the fiber reinforced polymer composition according to any one of the claims 1 to 7.

## Patentansprüche

1. Faser-verstärkte Polymer-Zusammensetzung, umfassend
(a) 10 bis 85 Gew.-%, bezogen auf das Gesamtgewicht der Faser-verstärkten Polymer-Zusammensetzung, eines Polypropylens (PP),
(b) 12,5 bis 53 Gew.-%, bezogen auf das Gesamtgewicht der Faser-verstärkten Polymer-Zusammensetzung, Fasern (F),
(c) 2 bis 12 Gew.-%, bezogen auf das Gesamtgewicht der Faser-verstärkten Polymer-Zusammensetzung, Glasblasen (GB) und
(d) 0,5 bis 5 Gew.-%, bezogen auf das Gesamtgewicht der Faser-verstärkten Polymer-Zusammensetzung, eines polar modifizierten Polypropylens (PMP) als Haftvermittler,
wobei das Polypropylen (PP) ein heterophasisches Propylen-Copolymer (HECO) umfasst, umfassend
(e) eine Polypropylen-Matrix (M), die ein Propylen-Homopolymer oder ein Propylen-Copolymer ist, und
(f) ein elastomeres Propylen-Copolymer (E), umfassend Einheiten, die sich von Propylen und Ethylen und/oder C₄ bis C₂₀ α-Olefin ableiten.

2. Faser-verstärkte Polymer-Zusammensetzung nach Anspruch 1, wobei das heterophasische Propylen-Copolymer (HECO) aufweist
(a) eine Schmelze-Fließ-Rate MFR2 (230°C), gemessen nach ISO1133, im Bereich von 1,0 bis 50 g/10 min,
(b) einen Comonomer-Gehalt im Bereich von 3,0 bis 25 Gew.-%, bezogen auf das gesamte heterophasische Propylen-Copolymer (HECO), und
(c) einen in Xylol löslichen Gehalt (XCS) im Bereich von 10 bis 50 Gew.-%, bezogen auf das gesamte heterophasische Propylen-Copolymer (HECO).

3. Faser-verstärkte Polymer-Zusammensetzung nach einem der vorangehenden Ansprüche, wobei die Faser-verstärkte Polymer-Zusammensetzung weiter bis zu 20 Gew.-%, bezogen auf das Gesamtgewicht der Faser-verstärkten Polymer-Zusammensetzung, eines elastomeren Polymer-Schlagzähigkeitsmodifizierungsmittels (IM) umfasst.

4. Faser-verstärkte Polymer-Zusammensetzung nach einem der vorangehenden Ansprüche, wobei die Fasern (F) einen mittleren Durchmesser von 8 bis 20 µm und ein Längen-Breiten-Verhältnis von 125 bis 650 aufweisen.

5. Faser-verstärkte Polymer-Zusammensetzung nach einem der vorangehenden Ansprüche, wobei die Fasern (F) ausgewählt sind aus der Gruppe, bestehend aus Glasfasern, Metallfasern, Mineralfasern, Keramikfasern und Gemischen davon.

6. Faser-verstärkte Polymer-Zusammensetzung nach einem der vorangehenden Ansprüche, wobei die Glasblasen (GB) einen mittleren Durchmesser von 10-50 µm aufweisen.

7. Faser-verstärkte Polymer-Zusammensetzung nach einem der vorangehenden Ansprüche, wobei das polar modifizierte Polypropylen (PMP) ein Propylen-Copolymer ist, das mit Maleinsäureanhydrid gepfropft ist, vorzugsweise das mit Maleinsäureanhydrid gepfropfte Propylen-Copolymer Ethylen als Comonomer-Einheiten umfasst.

8. Kraftfahrzeug-Gegenstand, umfassend die Faser-verstärkte Polymer-Zusammensetzung nach einem der vorangehenden Ansprüche.

9. Geschäumter Gegenstand, umfassend die Faser-verstärkte Polymer-Zusammensetzung nach einem der Ansprüche 1 bis 7.

## Revendications

1. Composition de polymère renforcé par des fibres comprenant :
(a) de 10 à 85 % en poids, relativement au poids total de la composition de polymère renforcé par des fibres, d'un polypropylène (PP),
(b) de 12,5 à 53 % en poids, relativement au poids total de la composition de polymère renforcé par des fibres, de fibres (F),
(c) de 2 à 12 % en poids, relativement au poids total de la composition de polymère renforcé par des fibres, de billes creuses en verre (GB), et
(d) de 0,5 à 5 % en poids, relativement au poids total de la composition de polymère renforcé par des fibres, d'un polypropylène modifié par un constituant polaire (PMP) comme agent de couplage,
dans laquelle le polypropylène (PP) comprend un copolymère de propylène hétérophasique (HECO) comprenant :
(e) une matrice de polypropylène (M), laquelle est un homopolymère de propylène ou un copolymère de propylène, et
(f) un copolymère de propylène élastomère (E) comprenant des unités dérivées de propylène et d'éthylène et/ou une α-oléfine C₄-C₂₀.

2. Composition de polymère renforcé par des fibres selon la revendication 1, dans laquelle le copolymère de propylène hétérophasique (HECO) a :
(a) un débit d'écoulement à l'état fondu MFR2 (230 °C), mesuré selon ISO 1133, de 1,0 à 50 g/10 min,
(b) une teneur en comonomère de 3,0 à 25 % en poids, relativement à la quantité totale de copolymère de propylène hétérophasique (HECO), et
(c) une teneur en xylène soluble (XCS) de 10 à 50 % en poids, relativement à la quantité totale de copolymère de propylène hétérophasique (HECO).

3. Composition de polymère renforcé par des fibres selon l'une quelconque des revendications précédentes, la composition de polymère renforcé par des fibres comprenant en outre jusqu'à 20 % en poids, relativement au poids total de la composition de polymère renforcé par des fibres, d'un modificateur de résistance aux chocs (IM) qui est un polymère élastomère.

4. Composition de polymère renforcé par des fibres selon l'une quelconque des revendications précédentes, dans laquelle les fibres (F) ont un diamètre moyen de 8 à 20 µm et un rapport d'allongement de 125 à 650.

5. Composition de polymère renforcé par des fibres selon l'une quelconque des revendications précédentes, dans laquelle les fibres (F) sont sélectionnées dans le groupe constitué de fibres de verre, de fibres métalliques, de fibres minérales, de fibres céramiques et de mélanges de celles-ci.

6. Composition de polymère renforcé par des fibres selon l'une quelconque des revendications précédentes, dans laquelle les billes creuses en verre (GB) ont un diamètre moyen de 10 à 50 µm.

7. Composition de polymère renforcé par des fibres selon l'une quelconque des revendications précédentes, dans laquelle le polypropylène modifié par un constituant polaire (PMP) est un copolymère de propylène greffé avec de l'anhydride maléique, le copolymère de propylène greffé avec de l'anhydride maléique comprenant préférablement de l'éthylène comme unités comonomères.

8. Article automobile comprenant la composition de polymère renforcé par des fibres selon l'une quelconque des revendications précédentes.

9. Article expansé comprenant la composition de polymère renforcé par des fibres selon l'une quelconque des revendications 1 à 7.
